# EUROPÄISCHE PATENTSCHRIFT

(11) **EP 1 173 264 B1**
(45) Veröffentlichungstag und Bekanntmachung des Hinweises auf die Patenterteilung: **19.03.2003**
(21) Anmeldenummer: 00925195.0
(22) Anmeldetag: 11.04.2000
(51) Int. Cl.: B01D 3/06, B01D 19/00, C08G 64/40

(54) **VERFAHREN UND VORRICHTUNG ZUM EINDAMPFEN VON POLYMERLÖSUNGEN THERMOPLASTISCHER POLYMERER**
METHOD AND DEVICE FOR EVAPORATING POLYMER SOLUTIONS OF THERMOPLASTIC POLYMERS
PROCEDE ET DISPOSITIF POUR CONCENTRER PAR EVAPORATION DES SOLUTIONS DE POLYMERES THERMOPLASTIQUES

(30) Priorität: 24.04.1999 DE 19918728
(43) Veröffentlichungstag der Anmeldung: 23.01.2002
(73) Patentinhaber: Bayer Aktiengesellschaft, 51368 Leverkusen (DE)
(72) Erfinder: ELSNER, Thomas, D-40593 Düsseldorf (DE); HEUSER, Jürgen, D-47803 Krefeld (DE); KORDS, Christian, D-47829 Krefeld (DE)
(86) Internationale Anmeldenummer: EP0003216
(87) Internationale Veröffentlichungsnummer: WO00064554

(56) Entgegenhaltungen:
- EP-A- 0 334 314
- EP-A- 0 352 727
- EP-A- 0 709 421
- EP-A- 0 723 029

## Beschreibung

Die Erfindung betrifft ein mehrstufiges kontinuierliches Verfahren zum Eindampfen von Polymerlösungen insbesondere thermoplastischer Polymere durch indirekten Wärmeaustausch unter Durchleitung der Polymerlösung durch Wärmetauscher, insbesondere Rohrbündelwärmetauscher, mit nachgeschaltetem Abscheider, sowie eine Vorrichtung zur Durchführung dieses Verfahrens. Weiterhin betrifft die Erfindung Polycarbonat, behandelt nach dem erfindungsgemäßen Verfahren mit einem Restgehalt an Bisphenol A von < 5 ppm.

Das Entfernen von flüchtigen Komponenten aus einer Polymerlösung ist einer der letzten Verfahrensschritte bei der Herstellung vieler Polymere. Die zu entfernenden flüchtigen Bestandteile können entweder Lösungsmittel und/oder nicht polymerisierte Monomere sein. Abhängig von der Größenordnung der Viskosität der Polymerlösung sind verschiedene Varianten zur Entfernung der flüchtigen Komponenten aus der Polymerlösung bekannt, bei denen jeweils die Polymerlösung über die Verdampfimgstemperatur der flüchtigen Bestandteile erhitzt wird. Als Apparate sind beispielsweise Dünnschichtverdampfer, Extruder und solche mit indirektem Wärmeaustausch bekannt.

Entscheidend bei der Erwärmung der Polymerlösung ist, dass das Polymer nicht thermisch geschädigt wird. Die thermische Schädigung bewirkt unerwünschte Farbveränderungen oder die Anwesenheit von Stippen im Polymer.

So ist in der EP-A-0 150 225 ein Apparat beschrieben, der über zwei in Reihe geschaltete Wärmetauscherpakete verfügt. Die Wärmetauscherpakete weisen horizontal angeordnete rechteckige Kanäle auf, in denen die Polymerlösung entgast wird. Dieser Apparat wird hauptsächlich für das zweistufige Aufheizen oder Kühlen viskoser Polymerlösungen während der Reaktion eingesetzt, ist aber relativ aufwendig in der Fertigung und im Betrieb.

Aus der EP-A1-0 451 602 ist ein Verfahren zum Aufkonzentrieren von Polymerlösungen bekannt, bei dem die vorerhitzte Lösung gedrosselt in ein gewendeltes Strömungsrohr entspannt wird und die konzentrierte Lösung in einem zweiten direkt nachgeschalteten Trockenapparat mit selbstreinigenden Elementen weiter aufkonzentriert wird. Das Verfahren hat den Nachteil, dass die Endkonzentration an Lösungsmittel im Polymer noch vergleichsweise hoch ist und dass die Verweilzeit in dem nachgeschalteten Trockenapparat zu lang ist. An den Innenwänden des Wendelrohres können sich Polymerpartikel festsetzen, die die Produktqualität vermindern.

Aufgabe dieser Erfindung ist es daher, ein Verfahren und eine Vorrichtung zur Entfernung von flüchtigen Komponenten aus einer Polymerlösung zur Verfügung zu stellen, die die Nachteile der aus dem Stand der Technik bekannten Verfahren nicht aufweisen.

Diese Aufgabe konnte mit der Ausarbeitung und Bereitstellung des nachstehend näher beschriebenen erfindungsgemäßen Verfahrens gelöst werden. Außerdem konnte diese Aufgabe mit der Ausarbeitung und Bereitstellung der nachstehend näher beschriebenen erfindungsgemäßen Vorrichtungen gelöst werden. Außerdem konnte diese Aufgabe mit der Ausarbeitung und Bereitstellung des nachstehend näher beschriebenen erfindungsgemäßen Polycarbonats, das nach dem erfindungsgemäßen Verfahren behandelt worden war, gelöst werden.

Gegenstand der Erfindung ist ein mehrstufiges kontinuierliches Verfahren zum Eindampfen von Polymerlösungen insbesondere thermoplastischer Polymere durch indirekten Wärmeaustausch unter Durchleitung der Polymerlösung durch Wärmetauscher, insbesondere Rohrbündelwärmetauscher, mit nachgeschaltetem Abscheider, dadurch gekennzeichnet, dass
a) zunächst in einer einzigen Stufe oder mehreren einzelnen Stufen die Polymerlösung mit einem Polymeranteil von 5 bis 20 Gew.-% in einer Kombination aus einem Rohrbündelwärmetauscher und einem Dünnschichtverdampfer, oder einem Schlangenrohrverdampfer oder in einem Rohrbündelwärmetauscher jeweils mit nachgeschaltetem Abscheider bei einer Temperatur von 100 bis 250°C auf 60 bis 75 Gew.-% aufkonzentiert wird, wobei der Druck im Abscheider von etwa 0,1 bis 0,4 MPa beträgt,
b) in einer weiteren Stufe die Polymerlösung in einem Rohrbündelwärmetauscher mit nachgeschaltetem Abscheider bei einer Temperatur von 130 bis 350°C von 60 bis 75 Gew.-% auf mindestens 95 Gew.-%, insbesondere auf mehr als 98 Gew.-% aufkonzentriert wird, wobei der Rohrbündelwärmetauscher vertikale, beheizte gerade Rohre mit oder ohne eingebauten statischen Mischem mit einem inneren Durchmesser von 5 bis 30 mm, vorzugsweise von 5 bis 15 mm, einer Länge von 0,5 bis 4 m, bevorzugt von 1 bis 2 m, aufweist und der Durchsatz je Wärmetauscherrohr durch die Rohre 5 bis 30 kg/h, bevorzugt 15 bis 25 kg/h, beträgt bezogen auf das Polymer, wobei der Druck im Abscheider von 3 kPa bis 0,1 MPa, bevorzugt 5 kPA bis 0,1 MPa, beträgt und wobei in die dem Abscheider nachgeschaltete Austragsvorrichtung auf der Saugseite ein Schleppmittel, insbesondere Schleppgas, eingetragen wird, und
c) das entgaste Polymer anschließend isoliert und ggfs. granuliert wird.

Bevorzugt wird als Schleppmittel Stickstoff (N₂) verwendet. Es hat sich gezeigt, dass durch den Eintrag von Stickstoff der Restgehalt an flüchtigen Komponenten auf <500 ppm reduziert werden kann, ohne dass es weiterer apparativer Mittel bedarf.

Gegenstand der Erfindung ist weiterhin die Vorrichtung zum Eindampfen von Polymerlösungen, insbesondere thermoplastischer Polymere durch indirekten Wärmeaustausch unter Durchleitung der Polymerlösung durch Wärmetauscher, insbesondere Rohrbündelwärmetauscher, mit nachgeschaltetem Abscheider, dadurch gekennzeichnet, dass
a) die erste Stufe bzw. die ersten Stufen einen Rohrbündelwärmetauscher und/oder Schlangenrohrverdampfer (3) jeweils mit nachgeschaltetem Abscheider (4) aufweist bzw. aufweisen,
b) die weitere Stufe einen Rohrbündelwärmetauscher (7) mit nachgeschaltetem Abscheider (8) aufweist, wobei der Rohrbündelwärmetauscher (7) vertikale beheizte gerade Rohre mit einem inneren Durchmesser von 5 bis 30 mm, vorzugsweise von 5 bis 15 mm, einer Länge von 0,5 bis 4 m, bevorzugt von 1 bis 2 m, aufweist und
c) jeder Stufe eine Austragsvorrichtung (6, 9) zum Transport der Polymerlösung nachgeschaltet ist, wobei auf der Saugseite der Austragsvorrichtung der weiteren Stufe ein Schleppmittel, insbesondere Schleppgas, eintragbar ist.

Das erfindungsgemäße Verfahren kann zur Entfernung von flüchtigen Komponenten aus Lösungen beliebiger flüssiger oder schmelzfähiger Polymere und ähnlichen Substanzen eingesetzt werden.

Die flüchtigen Komponenten außer dem Lösungsmittel können sowohl nicht polymerisierte Monomere oder Oligomere als auch andere niedermolekulare Edukte sein. Ein bei der Herstellung von thermoplastischen Polymeren, insbesondere von Polycarbonat, häufig eingesetztes Lösungsmittel ist Methylenchlorid oder ein Gemisch aus Methylenchlorid und Chlorbenzol.

Vorzugsweise wird das erfindungsgeinäße Verfahren jedoch zur Entgasung von thermoplastischen Polymeren eingesetzt. Diese Polymere umfassen alle Kunststoffe. die unter dem Einfluss von Druck und Temperatur fließfähig werden. Beispielhaft seien hier Polycarbonat, Polystyrol, Polyphenylensulfid, Polyurethan, Polyamid, Polyester, Polyacrylat, Polymethacrylat, SAN-Harz und ihre Copolymere genannt. Ganz besonders eignet sich das Verfahren zum Installieren und Trocknen von Polycarbonatlösungen.

Polycarbonate, die mit dem erfindungsgemäßen Verfahren besonders vorteilhaft verarbeitet werden können, sind sowohl Homopolycarbonate als auch Copolycarbonate. Die Polycarbonate können in grundsätzlich bekannter Weise linear oder verzweigt aufgebaut sein. Bis zu 80 Mol-%, vorzugsweise von 20 bis zu 50 Mol-%, der Carbonatgruppen in den geeigneten Polycarbonanten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen unter dem Oberbegriff der thermoplastischen aromatischen Polycarbonate subsumiert werden.

Besonders bevorzugt werden mit dem erfindungsgemäßen Verfahren thermoplastische Polycarbonate mit einem mittleren Molekulargewicht Mᵥ (ermittelt durch Messung der relativen Viskosität bei 25°C in CH₂Cl₂ und einer Konzentration von 0,5 g pro 100 ml CH₂Cl₂ von 12.000 bis 400.000, vorzugsweise von 18.000 bis 80.000 und insbesondere von 22.000 bis 60.000 behandelt. Ganz besonders bevorzugt ist Bisphenol-A-Homo-Polycarbonat mit den vorgenannten Eigenschaften.

Das nach dem Verfahren von Lösungsmittel befreite Polymer hat im geschmolzenen Zustand insbesondere eine Viskosität von 100 bis 5.000 Pas.

Ein Bisphenol-A-Homo-Polycarbonat, das nach diesem Verfahren behandelt wurde, weist bei Schmelztemperatur (320 °C) einen Restgehalt von Bisphenol A (BPA) von kleiner 5 ppm auf.

Die verwendeten Wärmetauscher, insbesondere die Rohrbündelwännetauscher, weisen ein beliebiges, dem Fachmann grundsätzlich bekanntes Mittel zum Erhitzen der von Polymerlösung durchflossenen Kanäle oder Rohre auf eine Temperatur oberhalb der Verdampfungstemperatur der flüchtigen Komponenten auf. Diese Mittel sind beispielsweise Widerstandserhitzer oder ein Leitungsnetzwerk zum Transport einer Wärmetauscherflüssigkeit.

In weiterer Ausgestaltung der Erfindung wird die erste Stufe a) in einem Rohrbündelwärmetauscher durchgeführt, der Wärmetauscherrohre für die Polymerlösung mit einem inneren Durchmesser von 5 bis 30 mm, vorzugsweise von 5 bis 15 mm, und mit einer Länge von 0,5 bis 5 m, bevorzugt von 3 bis 4 m, aufweist und wobei der Durchsatz durch die Wärmetauscherrohre je Rohr 5 bis 30 kg/h, bevorzugt 15 bis 25 kg/h, bezogen auf das Polymer beträgt.

In alternativer Weiterbildung der Erfindung wird als Austragsvorrichtung eine Zahnradpumpe, eine Fangpumpe oder eine Austragswalze verwendet. Bevorzugt wird die Verwendung einer Zahnradpumpe vorgeschlagen, deren Stopfbuchse bzw. Wellenabdichtung so ausgebildet ist, dass dort der Eintrag des Schleppgases erfolgen kann.

Alle von der Polymerlösung berührten Teile, insbesondere der Wärmetauscher bzw. die Rohrbündelwännetauscher können aus einem beliebigen Werkstoff gefertigt werden. Vorzugsweise werden jedoch diese Teile, insbesondere die Wärmetauscher aus einem eisenarmen Werkstoff mit einem Eisengehalt von höchstens 10% gefertigt. Besonders bevorzugt sind alle produktberührten Teile der Wärmetauscher aus Alloy 59 (2.4605), Inconell 686 (2.4606), Alloy-B2, Alloy-B3, Alloy B4, Alloy C-22, Alloy-C276, Alloy-C4 oder Alloy 625 gefertigt.

Die Erfindung wird nachfolgend anhand einer ein bevorzugtes Ausführungsbeispiel darstellenden Zeichnung näher erläutert.

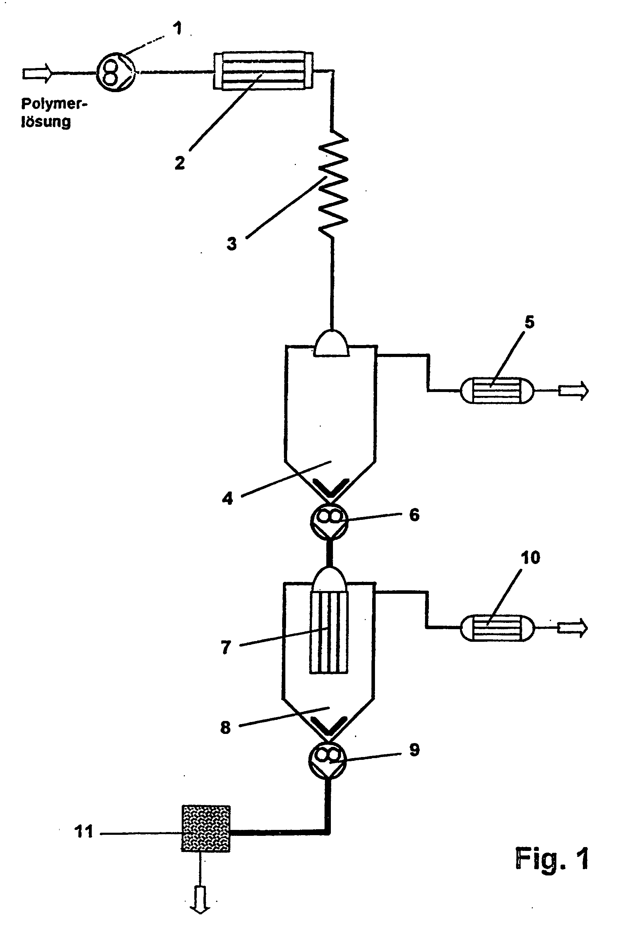

In der schematisch dargestellten einzigen Figur fördert eine Pumpe 1, beispielsweise eine Zahnrad-, Kreisel- oder Schraubenspindelpumpe, die 5 bis 20 %ige Polymerlösung in einer ersten Stufe durch einen ersten Rohrbündelwärmetauscher 2 und einen Schlangenrohrverdampfer 3 in den Sumpf eines Abscheiders 4. Im Abscheider 4 werden die leichter flüchtigen Komponenten abgetrennt und in einem Kondensator 5 kondensiert.

im dargestellten und insoweit bevorzugten Ausrührungsbeispiel fördert eine Zahnradpumpe 6 die bereits aufkonzentrierte Polymerlösung (25 bis 40 Gew.-% Polymer) durch einen weiteren Rohrbündelwärmetauscher und einem weiteren Schlangenrohrverdampfer in einen weiteren Abscheider 8, wo die leichter flüchtigen Komponenten abgetrennt und in einem Kondensator 10 kondensiert werden. Die nun auf 60 bis 85 Gew.-% Polymer aufkonzentrierte Lösung wird dann von einer Zahnradpumpe 9 durch einen zweiten Rohrbündelwärmetauscher in den Sumpf eines Abscheiders 11 gefördert.

Um nun die auf mehr als 98 Gew.-% aufkonzentrierte Polymerlösung bis zu einem Gehalt an flüchtigen Bestandteilen < 500 ppm weiter aufzukonzentrieren, wird in die Saugseite einer weiteren Zahnradpumpe Stickstoff als Schleppgas eingetragen, wodurch die gewünschte Reinheit der Polymerlösung erreicht wird.

Die im Sumpf 11 und der Zahnradpumpe entstehenden leichter flüchtigen Komponenten werden in einem Kondensator kondensiert. Die erfindungsgemäß entgaste Polymerschmelze wird von der Zahnradpumpe einer Granuliereinrichtung zugerührt.

Mit dem beschriebenen Verfahren lassen sich bei der Behandlung von Bisphenol-A-Homo-Polycarbonat bei einer Schmelztemperatur von ≤ 320 °C BPA-Restgehalt von 2 ppm, auf jeden Fall ≤ 5 ppm erreichen. Als Analysemethode für die BPA-Bestimmung wurde Gaschromatographie eingesetzt.

## Patentansprüche

1. Mehrstufiges kontinuierliches Verfahren zum Eindampfen von Polymerlösungen durch indirekten Wärmeaustausch unter Durchleitung der Polymerlösung durch Wärmetauscher mit nachgeschaltetem Abscheider, **dadurch gekennzeichnet, dass**
a) zunächst in einer einzigen Stufe oder mehreren einzelnen Stufen die Polymerlösung mit einem Polymeranteil von 5 bis 20 Gew.-% in einer Kombination aus Rohrbündelwärmeaustauscher und einem Dünnschichtverdampfer, oder einem Schlangenrohrverdampfer oder in einem Rohrbündelwärmetauscher jeweils mit nachgeschaltetem Abscheider bei einer Temperatur von 100 bis 250°C auf 60 bis 75 Gew.-% aufkonzentiert wird, wobei der Druck im Abscheider von etwa 0,1 bis 0,4 MPa beträgt,
b) in einer weiteren Stufe die Polymerlösung in einem Rohrbündelwärmetauscher mit nachgeschaltetem Abscheider bei einer Temperatur von 130 bis 350°C von 60 bis 75 Gew.-% auf mindestens 95 Gew.-% aufkonzentriert wird, wobei der Rohrbündelwärmetauscher vertikale, beheizte gerade Rohre mit oder ohne eingebauten statischen Mischern mit einem inneren Durchmesser von 5 bis 30 mm und einer Länge von 0,5 bis 4 m aufweist und der Durchsatz je Wärmetauscherrohr durch die Rohre 5 bis 30 kg/h beträgt bezogen auf das Polymer, wobei der Druck im Abscheider von 3 kPa bis 0,1 MPa beträgt und wobei in eine dem Abscheider nachgeschaltete Austragsvorrichtung auf der Saugseite ein Schleppmittel eingetragen wird, und
c) das entgaste Polymer anschließend isoliert und ggfs. granuliert wird.

2. Verfahren nach Anspruch 1, **dadurch gekennzeichnet, dass** als Schleppmittel Stickstoff (N₂) verwendet wird.

3. Verfahren nach Anspruch 1 oder 2, **dadurch gekennzeichnet, dass** das Polymer der Polymerlösung ein thermoplastisches Polymer ausgewählt aus der Reihe: Polycarbonat, Polystyrol, Polyphenylensulfid, Polyurethan, Polyamid, Polyester, Polyacrylat, Polymethacrylat, ein SAN-Harz oder ein Copolymer oder eine Mischung aus diesen Polymeren ist.

4. Verfahren nach Anspruch 1 oder 2, **dadurch gekennzeichnet, dass** das Polymer ein Polycarbonat ist.

5. Verfahren nach einem der Ansprüche 1 bis 4, **dadurch gekennzeichnet, dass** das Lösungsmittel Methylenchlorid oder ein Gemisch aus Chlorbenzol und Methylenchlorid ist.

6. Verfahren nach Anspruch 1, **dadurch gekennzeichnet dass** die erste Stufe a) in einem Rohrbündelwärmetauscher durchgeführt wird/werden, der Wärmetauscherrohre für die Polymerlösung mit einem inneren Durchmesser von 5 bis 30 mm und mit einer Länge von 0,5 bis 5 m aufweist und wobei der Durchsatz durch die Wärmetauscherrohre je Rohr 5 bis 30 kg/h bezogen auf das Polymer beträgt.

7. Vorrichtung zum Eindampfen von Polymerlösungen durch indirekten Wärmeaustausch unter Durchleitung der Polymerlösung durch Wärmetauscher mit nachgeschaltetem Abscheider, **dadurch gekennzeichnet, dass**
a) eine erste Stufe einen Rohrbündelwärmetauscher und/oder Schlangenrohrverdampfer (3) jeweils mit nachgeschaltetem Abscheider (4) aufweist,
b) eine weitere Stufe einen Rohrbündelwärmetauscher (7) mit nachgeschaltetem Abscheider (8) aufweist, wobei der Rohrbündelwärmetauscher (7) vertikale beheizte gerade Rohre mit einem inneren Durchmesser von 5 bis 30 mm und einer Länge von 0,5 bis 4 m aufweist und
c) jeder Stufe eine Austragsvorrichtung (6, 9) zum Transport der Polymerlösung nachgeschaltet ist, wobei auf der Saugseite der Austragsvorrichtung der weiteren Stufe ein Schleppmittel eintragbar ist.

8. Vorrichtung nach Anspruch 7, **dadurch gekennzeichnet, dass** als Austragsvorrichtung (6, 9) eine Zahnradpumpe verwendet wird.

9. Vorrichtung nach Anspruch 7, **dadurch gekennzeichnet, dass** als Austragsvorrichtung eine Fangpumpe verwendet wird.

10. Vorrichtung nach Anspruch 7, **dadurch gekennzeichnet, dass** als Austragsvorrichtung eine Austragswalze verwendet wird.

11. Vorrichtung nach Anspruch 8, **dadurch gekennzeichnet, dass** eine Stopfbuchse oder eine Wellenabdichtung der Zahnradpumpe so ausgebildet ist, dass dort der Schleppmitteleintrag erfolgen kann.

12. Vorrichtung nach einem der Ansprüche 7 bis 10, **dadurch gekennzeichnet, dass** alle von der Polymerlösung oder dem geschmolzenen Polymer berührten Teile der Trocknungsvorrichtung aus eisenarmem Werkstoff gefertigt sind.

13. Vorrichtung nach Anspruch 12, **dadurch gekennzeichnet, dass** der eisenarme Werkstoff ausgewählt ist aus der Reihe: Alloy 59 (2.4605), Inconell 686 (2.4606), Alloy-B2, Alloy C-22, Alloy-C276, Alloy-C4, Alloy B2, Alloy B3, Alloy B4.

## Claims

1. Multi-stage, continuous process for evaporating polymer solutions by indirect heat exchange by passing the polymer solution through heat exchangers having a downstream separator, **characterised in that**
a) first, in a single stage or in a plurality of individual stages, the polymer solution having a polymer content of from 5 to 20 wt.% is concentrated to from 60 to 75 wt.% in a combination of a tubular heat exchanger and a thin-film evaporator, or a coiled tube evaporator or in a tubular heat exchanger, each having a downstream separator, at a temperature of from 100 to 250°C, the pressure in the separator being approximately from 0.1 to 0.4 MPa,
b) in a further stage, the polymer solution is concentrated from 60 to 75 wt.% to at least 95 wt.% in a tubular heat exchanger having a downstream separator, at a temperature of from 130 to 350°C, the tubular heat exchanger having vertical, heated, straight tubes, with or without built-in static mixers, having an inside diameter of from 5 to 30 mm and a length of from 0.5 to 4 m, and the throughput per heat exchanger tube through the tubes being from 5 to 30 kg/h, based on the polymer, the pressure in the separator being from 3 kPa to 0.1 MPa, and an entrainer being introduced into a delivery device located downstream of the separator, at the intake side, and
c) the degassed polymer is subsequently isolated and, optionally, granulated.

2. Process according to claim 1, **characterised in that** nitrogen (N₂) is used as the entrainer.

3. Process according to claim 1 or 2, **characterised in that** the polymer of the polymer solution is a thermoplastic polymer selected from the group: polycarbonate, polystyrene, polyphenylene sulfide, polyurethane, polyamide, polyester, polyacrylate, polymethacrylate, an SAN resin or a copolymer or a mixture of those polymers.

4. Process according to claim 1 or 2, **characterised in that** the polymer is a polycarbonate.

5. Process according to any one of claims 1 to 4, **characterised in that** the solvent is methylene chloride or a mixture of chlorobenzene and methylene chloride.

6. Process according to claim 1, **characterised in that** the first stage a) is/are carried out in a tubular heat exchanger which has heat exchanger tubes for the polymer solution having an inside diameter of from 5 to 30 mm and a length of from 0.5 to 5 m, the throughput through the heat exchanger tubes per tube being from 5 to 30 kg/h, based on the polymer.

7. Apparatus for evaporating polymer solutions by indirect heat exchange by passing the polymer solution through heat exchangers having a downstream separator, **characterised in that**
a) a first stage has a tubular heat exchanger and/or coiled tube evaporator (3) each having a downstream separator (4),
b) a further stage has a tubular heat exchanger (7) having a downstream separator (8), the tubular heat exchanger (7) having vertical, heated, straight tubes having an inside diameter of from 5 to 30 mm and a length of from 0.5 to 4 m, and
c) there is arranged downstream of each stage a delivery device (6, 9) for transporting the polymer solution, it being possible for an entrainer to be introduced at the intake side of the delivery device of the further stage.

8. Apparatus according to claim 7, **characterised in that** a gear pump is used as the delivery device (6, 9).

9. Apparatus according to claim 7, **characterised in that** an entrapment pump is used as the delivery device.

10. Apparatus according to claim 7, **characterised in that** a delivery roller is used as the delivery device.

11. Apparatus according to claim 8, **characterised in that** a gland or a shaft seal of the gear pump is so formed that the entrainer can be introduced there.

12. Apparatus according to any one of claims 7 to 10, **characterised in that** all parts of the drying device that come into contact with the polymer solution or the molten polymer are produced from low-iron material.

13. Apparatus according to claim 12, **characterised in that** the low-iron material is selected from the group: Alloy 59 (2.4605), Inconell 686 (2.4606), Alloy-B2, Alloy C-22, Alloy-C276, Alloy-C4, Alloy B2, Alloy B3, Alloy B4.

## Revendications

1. Procédé continu en plusieurs étapes pour la concentration par évaporation de solutions de polymère par échange de chaleur indirecte en faisant passer la solution de polymère dans des échangeurs de chaleur avec séparateur aval, **caractérisé en ce que**:
a) tout d'abord, en une seule étape ou en plusieurs étapes individuelles, la solution de polymère contenant une proportion de polymère de 5 à 20 % en poids est concentrée dans une combinaison constituée d'un échangeur de chaleur à faisceau de tubes et d'un évaporateur à couche mince, un évaporateur à serpentin ou un échangeur de chaleur à faisceau de tubes, chaque fois avec un séparateur aval, à une température de 100 à 250° C jusqu'à 60 à 75 % en poids, la pression dans le séparateur étant comprise entre environ 0,1 et 0,4 MPa,
b) dans une deuxième étape, la solution de polymère est concentrée dans un échangeur de chaleur à faisceau de tubes avec séparateur aval, à une température de 130 à 350° C, de 60 à 75 % en poids jusqu'à au moins 95 % en poids, l'échangeur de chaleur à faisceau de tubes présentant des tubes chauffés, rectilignes verticaux avec ou sans mélangeur statique incorporé, d'un diamètre intérieur de 5 à 30 mm, d'une longueur de 0,5 à 4 m, le débit dans chaque tube d'échangeur de chaleur étant compris entre 5 et 30 kg/h, par rapport au polymère, la pression dans le séparateur étant comprise entre 3 kPa et 0,1 MPa, un agent d'entraînement, étant introduit sur le côté aspiration du dispositif d'extraction placé en aval du séparateur, et
c) le polymère dégazé est ensuite isolé et éventuellement granulé.

2. Procédé selon la revendication 1, **caractérisé en ce que** comme agent d'entraînement, on utilise de l'azote (N₂).

3. Procédé selon la revendication 1 ou 2, **caractérisé en ce que** le polymère de la solution de polymère est un polymère thermoplastique sélectionné dans la série: polycarbonate, polystyrène, poly(sulfure de phénylène), polyuréthane, polyamide, polyester, polyacrylate, polyméthacrylate, une résine SAN ou un copolymère ou mélange de ces polymères.

4. Procédé selon la revendication 1 ou 2, **caractérisé en ce que** le polymère est un polycarbonate.

5. Procédé selon l'une des revendications 1 à 4, **caractérisé en ce que** le solvant est le chlorure de méthylène ou un mélange de chlorobenzène et de chlorure de méthylène.

6. Procédé selon la revendication 1, **caractérisé en ce que** la première ou les premières étapes a) sont exécutées dans un échangeur de chaleur à faisceau de tubes, qui présente des tubes d'échange de chaleur pour la solution de polymère d'un diamètre intérieur de 5 à 30 mm et d'une longueur de 0,5 à 5 m, le débit traversant les tubes d'échange de chaleur étant de 5 à 30 kg/h et par tube, calculé par rapport au polymère.

7. Dispositif de concentration par évaporation de solution de polymère par échange de chaleur indirect et passage de la solution de polymère dans des échangeurs de chaleur avec séparateur aval, **caractérisé en ce que**:
a) une première étape présente un échangeur de chaleur à faisceau de tubes et/ou un évaporateur à tubes en spirale (3), chacun suivi d'un séparateur (4),
b) une autre étape présente un échangeur de chaleur (7) à faisceau de tubes suivi d'un séparateur (8), l'échangeur de chaleur (7) à faisceau de tubes présentant des tubes chauffés rectilignes verticaux d'un diamètre intérieur de 5 à 30 mm, d'une longueur de 0,5 à 4 m, et
c) un dispositif d'extraction (6, 9) pour le transport de la solution de polymère, disposé en aval de chaque étape, un agent d'entraînement pouvant être introduit sur le côté aspiration du dispositif d'extraction de l'autre étape.

8. Dispositif selon la revendication 7, **caractérisé en ce que** l'on utilise une pompe à engrenages comme dispositif d'extraction (6, 9).

9. Dispositif selon la revendication 7, **caractérisé en ce que** l'on utilise une pompe de fixation comme dispositif d'extraction.

10. Dispositif selon la revendication 7, **caractérisé en ce que** l'on utilise un cylindre d'extraction comme dispositif d'extraction.

11. Dispositif selon la revendication 8, **caractérisé en ce qu'**une douille de bouchon ou une étanchéité d'arbre de la pompe à engrenages est configurée de manière à pouvoir y réaliser l'introduction de l'agent d'entraînement.

12. Dispositif selon l'une des revendications 7 à 10, **caractérisé en ce que** toutes les pièces du dispositif de séchage en contact avec la solution de polymère ou avec le polymère fondu sont réalisées en un matériau pauvre en fer.

13. Dispositif selon la revendication 12, **caractérisé en ce que** le matériau pauvre en fer est sélectionné dans le groupe: Alloy 59 (2.46 05), Inconell 686 (2.46 06), Alloy-B2, Alloy C-22, Alloy C-276, Alloy-C4, Alloy B2, Alloy B3, Alloy B4.
